# EUROPEAN PATENT APPLICATION

(11) **EP 1 542 338 A2**
(43) Date of publication of application: **15.06.2005**
(21) Application number: 04028466.3
(22) Date of filing: 01.12.2004
(51) Int. Cl.: H02K 3/34

(54) **Electric motor**

(30) Priority: 10.12.2003 JP 2003412172
(71) Applicant: FANUC LTD, Minamitsuru-gun, Yamanashi 401-0597 (JP)
(72) Inventor: Sogabe, Masatoyo, Gotenba-shi Shizuoka 412-0043 (JP); Tamai, Takayuki, Fujiyoshida-shi Yamanashi 403-0016 (JP)
(74) Representative: Schmidt, Steffen J., Dipl.-Ing.

(57) **Abstract**

An electric motor, the insulating performance of the coil of which is high, contains no voids or few voids in the stator core. The coil 3 is wrapped in the sheet of insulating paper 4, which is open to the opening portion side of the slot 2 of the stator core 1, and is inserted into the slot 2. After that, molding is conducted by the insulating resin 5. When the resin 5 is entered into the slot 5, air is discharged from the slot to the opening portion. Nothing blocks this flow of air. Therefore, the generation of voids such as cavities and empty holes can be prevented, and the coil 3 can be insulated in the slot 2 under the condition that no voids are generated or the generation of voids is reduced. As no voids are generated, the dielectric strength can be enhanced. Further, the number of manufacturing processes can be decreased and the quantity of insulating paper used can be also decreased. Accordingly, it is possible to obtain an electric motor with a lower manufacturing cost.

## Description

### BACKGROUND OF THE INVENTION

### 1. Field of the Invention

The present invention relates to the insulation of a coil inserted into a stator core slot of an electric motor.

### 2. Description of the Patented Art

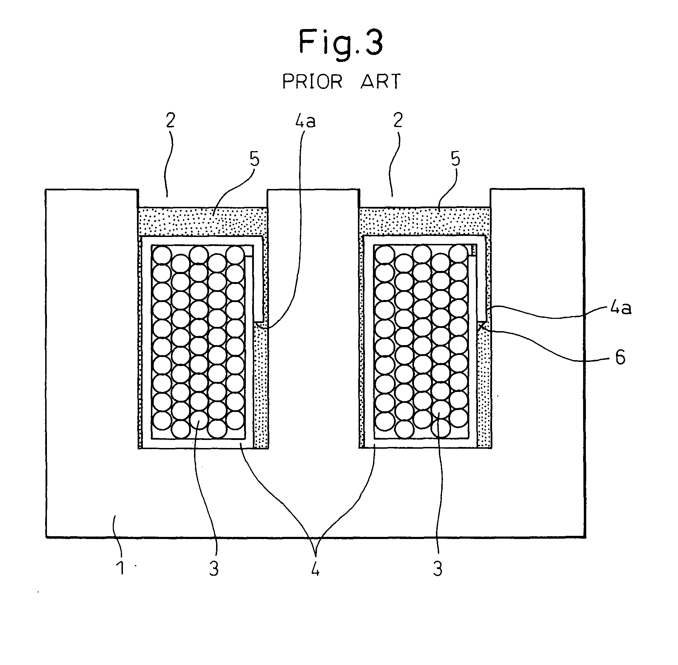

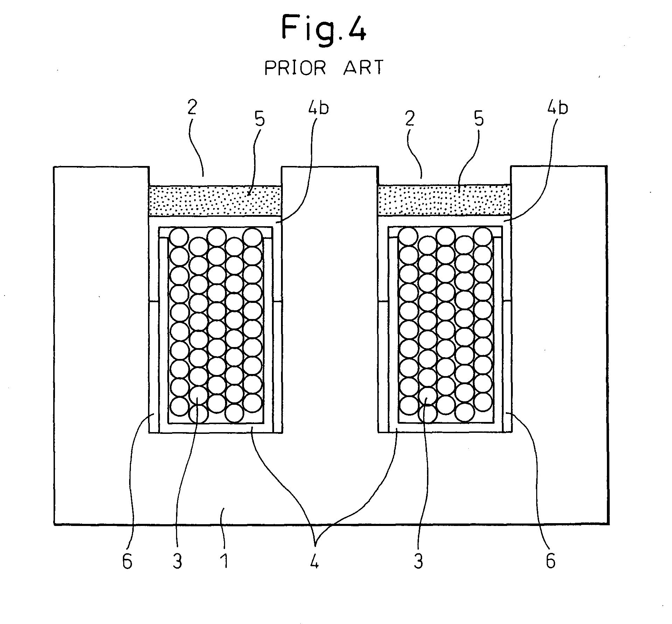

Figs. 3 and 4 are views showing a method of insulating a coil, inserted into a slot of a stator core, which is commonly used. Figs. 3 and 4 show examples of the stator core of a linear motor. In the example shown in Fig. 3, the coil 3 inserted into the slot 2 of the stator core 1 is previously wrapped in a sheet of insulating paper 4. The coil 3 previously wrapped in the sheet of insulating paper 4 is inserted into the slot 2 of the stator core 1 and then molded by a resin 5 having an insulating property. In this case, there is a possibility that a step portion is generated at the end portion 4a of the sheet of insulating paper 4, so that a void 6, in which the resin 5 is not filled, is formed.

In the example shown in Fig. 4, the coil 3 is wrapped by the sheet of insulating paper 4 except for a portion of the coil 3 located on the opening portion side of the slot 2 of the stator core 1 and inserted into the slot 2. After that, the sheet of insulating paper 4b functioning as a lid is inserted into the slot 2. After insulating operation has been conducted, before molding, in this way, the coil 3 is molded by the resin 5 having an insulating property. In this case, the sheet of insulating paper 4b forming the lid in the opening portion side of the slot 2 can prevent the resin 5 from entering a bottom portion of the slot 2. Accordingly, there is a possibility that a void 6, which is not filled with the resin, is generated in the bottom portion of the slot 2 below the sheet of insulating paper 4b forming the lid.

Concerning the method of insulating the coil inserted into the slot of the stator core, the aforementioned method is commonly used, and a method of insulation, and an electric motor related to the present invention described later, have not been discovered.

As described before, in the conventional case of insulation of the coil inserted into the slot, there is a high possibility that a void is generated in the slot. According to the method of previously wrapping the coil 3 in the sheet of insulating paper 4 and inserting the coil 3 into the slot 2 of shown in Fig. 3, there is a possibility that a void is generated in the end portion 4a of the sheet of insulating paper 4. According to the method shown in Fig. 4, there is a high possibility that a void 6 is generated in the lower region (on the bottom side of the slot) of the sheet of insulating paper 4b forming the lid. In the case of using an electric motor in which insulation is placed between the coil 3 and the stator core 1 by the method described above, if a void is generated between the coil 3 arranged in the slot 2 and the stator core 1, an electric charge is concentrated upon this portion and the dielectric breakdown may result.

It is an object of the present invention to provide an electric motor, the dielectric strength of which is enhanced by removing the void or reducing the generation of the void.

### SUMMARY OF THE INVENTION

According to the present invention, a coil is wrapped in a sheet of insulating paper arranged along an inner face profile of a slot and open to a slot opening portion, and is arranged in a stator core. Insulating resin is filled into the slot of the stator core. Further, when it is composed in such a manner that the thickness of the insulating resin in the direction from an end portion of the coil to the opening portion of the slot is formed to be not less than the thickness of the insulating resin necessary to insulate the coil, the coil can be positively insulated from the stator core.

The sheet of insulating paper is not provided with folded and bent portions in the direction in which a bubble of air is generated at the time of filling the insulating resin into the slot.

As the sheet of insulating paper is open onto the opening portion side of the stator core, when the insulating resin is filled into the stator core, air in the stator core can be smoothly discharged from the opening portion of the stator core without staying in the stator core. Therefore, no voids are generated or the generation of void is reduced.

Since no voids are generated or the generation of voids is reduced, it is possible to provide an electric motor, the dielectric strength of which is high. As it is unnecessary to wrap the coil in the sheet of insulating paper and to attach a lid of the insulating paper on the slot, it is possible to reduce the number of manufacturing process, and further a quantity of insulating paper can be decreased. Accordingly, the cost of manufacturing an electric motor can be reduced.

### BRIEF DESCRIPTION OF THE DRAWINGS

Fig. 1a is a schematic illustration showing a primary portion of the first embodiment of the present invention applied to a linear motor.
Fig. 1b is a schematic illustration showing a primary portion of the first embodiment of the present invention applied to a linear motor.
Fig. 2 is a schematic illustration showing a primary portion of the second embodiment of the present invention applied to a rotary type electric motor.
Fig. 3 is a schematic illustration for explaining a conventional method of insulation between a stator core and a coil.
Fig. 4 is a schematic illustration for explaining another conventional method of insulation between a stator core and a coil.

### DETAILED DESCRIPTION

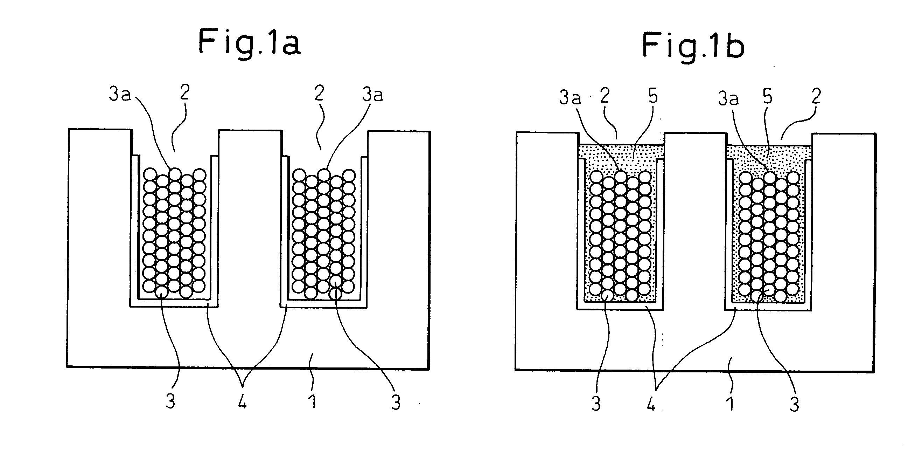

Figs. 1a and 1b are schematic illustrations showing a primary portion of an embodiment of the present invention applied to a linear motor. Fig. 1a is a view showing a state before molding of insulating resin, and Fig. 1b is a view showing a state after molding of insulating resin. Reference numeral 1 designates a stator core, and reference numeral 2 designates a slot provided in the stator core 1. Reference numeral 3 designates a coil, and reference numeral 4 designates a sheet of insulating paper. In this connection, the same parts in Figs. 1a and 1b are indicated by same reference numerals as in Figs. 3 and 4 in which the conventional examples are shown.

The coil 3 is inserted into each slot 2 of the stator core 1 in such a manner that the coil 3 is wrapped in the sheet of insulating paper 4 which is arranged along an inner face profile of the slot except for the opening portion side of the slot 2. This state of insertion of the coil 3 is illustrated in Fig. 1a. As shown in Fig. 1b, on the opening portion side of the slot 2, under the condition that the coil 3 is not wrapped in the sheet of insulating paper 4, molding is conducted on the stator so that the opening portion of the slot 2 can be closed by the insulating resin 5 having an insulating property. In this case, it is composed in such a manner that the thickness of the insulating resin 5 from the end portion 3a of the coil 3 in the opening portion of the slot 2, that is, the thickness of the insulating resin 5 from the end portion 3a of the coil 3 in the direction of the depth of the slot is large sufficient to insulate the coil 3.

At the time of molding, the resin 5 enters into the slot 2, and air is discharged from the slot. At this time, as one end portion of the slot 2 is open as shown in Fig. 1a, air can be smoothly discharged from the slot 2. Accordingly, there is little possibility of the generation of a void. In the case of the conventional example shown in Fig. 3, there is a possibility that a void is generated, as follows. There is a step portion at the end portion 4a of the sheet of insulating paper 4. Therefore, when air flows, to be discharged, toward the opening portion side by entering the resin 5 into the slot 2, the flow of air is blocked by this step portion. Accordingly, a void, which is a bubble of air, may be generated in this portion. In the case of the conventional example shown in Fig. 4, there is a possibility that a void is generated as follows. In the case where the opening portion of the slot 2 is closed by the sheet of insulating paper 4b forming a lid, resin 5 can not enter into the slot 2. Accordingly, there is a possibility that a gap is formed between the sheet of insulating paper 4b forming the lid and the bottom portion of the slot 2. Even when the resin 5 enters this gap, the sheet of insulating paper 4b prevents the air from flowing out to the opening portion, so that a void, which is a bubble of air, is generated. However, according to the present embodiment, when the resin 5 enters into the slot 2, nothing blocks the flow of air. On the sheet of insulating paper 4, no bent portions and no folded portions are formed so that no bubble of air can be generated. Further, the sheet of insulating paper 4 is not formed into a profile preventing an air from flowing to the opening portion of the slot 2. Therefore, nothing blocks a flow of air at the time of entering of the resin 5. Accordingly, air can be smoothly discharged and no bubble of air is generated.

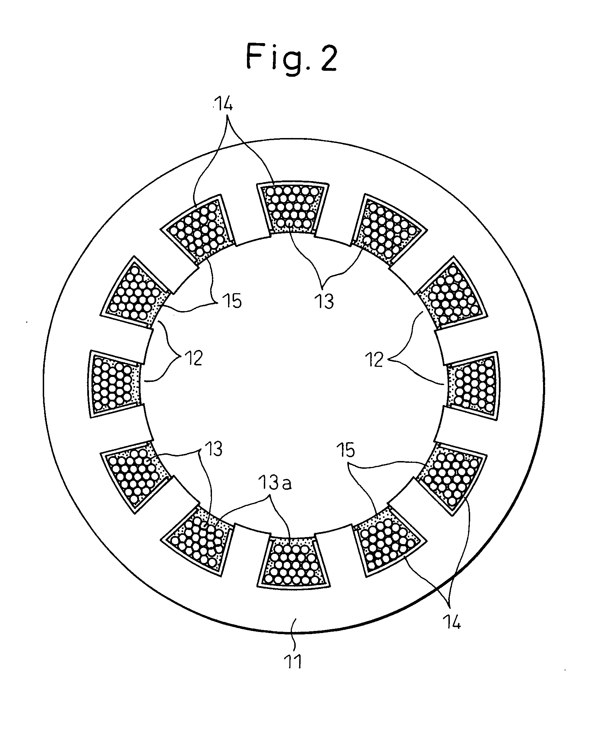

Fig. 2 is a schematic illustration for explaining an example in which the present invention is applied to a rotary type electric motor. The coil 13 is inserted into the slot 12 of the stator core 11 in such a manner that the coil 13 is wrapped in the sheet of insulating paper 14 which is arranged along an inner face profile of the slot 12 open to the opening portion of the slot 12. After that, molding is conducted by the insulating resin 15 so that the coil 13 can be insulated. The thickness of the insulating resin 15 in the direction from the end portion 13a of the coil 13 to the opening of the slot is arranged so that the thickness can be large sufficient to insulate the coil 3. Even in this case, the sheet of insulting paper 14 on the opening portion side of the slot 12 is open. Therefore, at the time of molding of the insulating resin 15, an air flow in the slot is not blocked by the resin which enters into the slot 12. Accordingly, air can be smoothly discharged, and the generation of a void can be prevented.

As described above, in each embodiment of the present invention, the generation of voids such as cavities and empty holes is prevented, and it becomes possible to form a coil and stator core having less voids. Therefore, it is possible to provide an electric motor, the dielectric strength of which is high.

It is unnecessary to conduct the wrapping operation of the coil 3, 13 in a sheet of insulating paper. Further, it is unnecessary to conduct the attaching operation to attach a lid of the insulating paper to the slot after inserting the coil into the slot. Therefore, the number of manufacturing process can be reduced. Further, it is possible to decrease a quantity of the insulating paper to be used. Accordingly, the cost of manufacturing an electric motor can be reduced.

Although the invention has been shown and described with exemplary embodiments thereof, it should be understood by those skilled in the art that the foregoing and various other changes, omissions and additions may be made therein and thereto without departing from the spirit and the scope of the invention.

## Claims

1. An electric motor comprising a stator core (1, 11) in which a slot (2, 12) is formed, and a coil (3, 13) arranged in a sheet of insulating paper (4, 14), **characterized in that** the sheet of insulating paper (4, 14) is arranged along an inner face profile of the slot (2, 12), and is open at a slot opening portion, and insulating resin (5, 15) is filled into the slot (2, 12) of the stator core (1, 11), and the thickness of the insulating resin (5, 15) in the direction from an end portion (3a, 13a) of the coil (3, 13) to the opening portion of the slot (2, 12) is at least not less than a thickness necessary to insulate the coil (3, 13).

2. An electric motor according to claim 1, **characterized in that** the sheet of insulating paper (4, 14) is not provided with folded or bent portions in the direction in which a bubble of air may be generated when filling the insulating resin (5, 15) into the slot (2, 12).
